# FASCICULE DE BREVET EUROPEEN

(11) **EP 3 605 775 B1**
(45) Date de publication et mention de la délivrance du brevet: **20.04.2022**
(21) Numéro de dépôt: 18306059.9
(22) Date de dépôt: 03.08.2018
(51) Int. Cl.: H02J 3/32, H02J 3/38, H02J 7/00, H02M 7/487, H02J 7/34

(54) **MODULE DE STOCKAGE D'ÉNERGIE ÉLECTRIQUE, SYSTÈME ET PROCÉDÉ ASSOCIÉS**
MODUL ZUR SPEICHERUNG VON ELEKTRISCHER ENERGIE, ENTSPRECHENDES SYSTEM UND VERFAHREN
ELECTRICAL ENERGY STORAGE MODULE AND ASSOCIATED SYSTEM AND METHOD

(43) Date de publication de la demande: 05.02.2020
(73) Titulaire: GE Energy Power Conversion Technology Limited, Rugby Warwickshire CV21 1BU (GB)
(72) Inventeur: PERMUY, Alfred, 91140 Villebon-sur-Yvette (FR); SOUA, Samir, 91140 Villebon-sur-Yvette (FR)
(74) Mandataire: Casalonga

(56) Documents cités:
- WO-A1-2014/199628
- US-A1- 2013 002 203
- US-A1- 2014 319 919

## Description

La présente invention concerne le stockage d'énergie électrique produite par exemple par une éolienne et concerne plus particulièrement un module de stockage d'énergie électrique, un procédé de mise en œuvre du module et un système de stockage d'énergie électrique comprenant plusieurs modules.

Un circuit électrique de puissance comprend généralement au moins un système de stockage d'énergie électrique à batteries connu sous l'acronyme BESS «Battery Energy Storage System ».

Le système de stockage d'énergie électrique est commandé de manière à stocker de l'énergie électrique dans par exemple une batterie ou une supercapacité et restituer l'énergie emmagasinée, par exemple lorsque le circuit électrique de puissance ne reçoit plus d'énergie électrique.

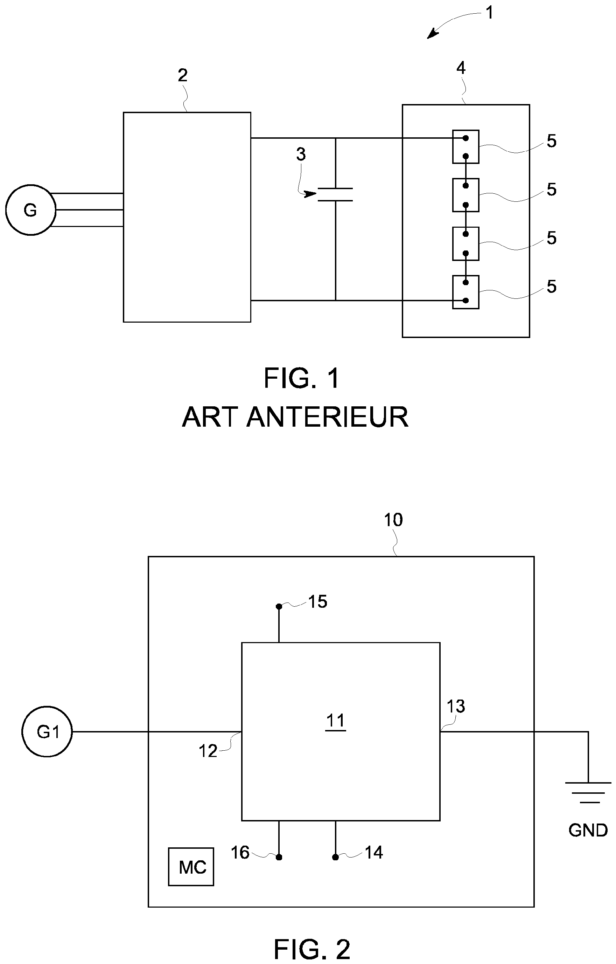

On se réfère à la figure 1 qui illustre un exemple d'un système de stockage d'énergie électrique 1 selon l'état de la technique.

Le système 1 de stockage d'énergie électrique à batteries comprend un onduleur 2 de tension réversible, par exemple à deux niveaux de tension, relié à une source G réversible d'énergie électrique triphasée ainsi qu'un condensateur 3 de filtrage et un dispositif 4 de stockage d'énergie électrique raccordés à l'onduleur.

Le dispositif 4 de stockage d'énergie électrique comprend par exemple des batteries 5 reliées en série.

L'onduleur 2 est commandé de manière à charger les batteries 5 lorsque la source G génère de la puissance électrique ou de manière à décharger les batteries 5 lorsque la source G consomme de la puissance électrique.

Bien qu'une seule source G soit représentée, le système 1 peut être relié à plusieurs sources indépendantes.

Les batteries 5 sont généralement des batteries de basse tension, c'est-à-dire que la tension aux bornes de chacune des batteries est inférieure à 1500 volts. Une intervention sur des batteries de basse tension ne nécessite pas d'agrément moyenne ou haute tension, notamment pour la consignation, la maintenance ou le remplacement des batteries.

Le dispositif 4 de stockage d'énergie électrique est dimensionné pour stocker une quantité d'énergie électrique prédéterminée pouvant atteindre par exemple quelques mégawatts pendant quelques minutes ou quelques heures.

Il est utile de relier en série plusieurs batteries 5 afin de diminuer le courant dans les câbles.

Par conséquent, la tension aux bornes du dispositif 4 de stockage d'énergie électrique est généralement supérieure à 1500 volts, par exemple de 3000 à 20000 volts.

Le dispositif 4 appartient à la catégorie des dispositifs de haute tension nécessitant des agréments contraignants pour toute intervention sur le dispositif, notamment pour la consignation, la maintenance ou le remplacement du dispositif.

Comme toutes les batteries sont reliées en série, si une batterie 5 est défaillante, le dispositif 4 n'est plus opérationnel.

Dans le cas où le système de stockage d'énergie électrique 1 alimente une charge, celle-ci n'est plus alimentée.

Le système de stockage d'énergie électrique 1 est donc peu fiable.

De plus, il n'est pas possible de contrôler individuellement chaque batterie 5 incorporée dans le dispositif 4 pour notamment assurer une maintenance préventive du système.

Il est donc proposé de pallier les inconvénients liés aux systèmes de stockage d'énergie électrique à batteries selon l'état de la technique, notamment d'améliorer la fiabilité et faciliter la mise en œ uvre de tels systèmes.

Les documents WO 2014/199628 A1 et US 2014/319919 A1 illustrent d'autres exemples de modules de stockage d'énergie électrique selon l'état de la technique.

Au vu de ce qui précède, il est proposé, selon un premier aspect, un module de stockage d'énergie électrique comprenant un dispositif de conversion d'énergie électrique réversible destiné à être relié à une source d'énergie électrique et un dispositif de stockage d'énergie électrique.

Le dispositif de stockage comprend une première branche comprenant deux condensateurs de filtrage en série et une deuxième branche comprenant deux moyens de stockage d'énergie électrique identiques, le nœud commun aux deux condensateurs et le nœud commun aux deux moyens de stockage d'énergie étant reliés par une impédance, une première extrémité des première et deuxième branches étant reliées au dispositif de conversion d'énergie électrique, une deuxième extrémité des première et deuxième branches étant reliées au dispositif de conversion d'énergie électrique.

Selon une autre caractéristique, le dispositif de stockage comprend en outre comprend un interrupteur de déconnexion relié entre la deuxième extrémités desdites branches et une borne de sortie, un interrupteur de shunt relié d'une part entre l'interrupteur de déconnexion et la borne de sortie et, d'autre part, à la première extrémité desdites branches de manière à shunter les moyens de stockage d'énergie électrique, et un interrupteur de mise à la masse relié entre le nœud commun aux deux moyens de stockage et une masse.

Selon un premier mode de réalisation, le dispositif de conversion d'énergie électrique réversible comprend un onduleur de tension réversible à trois niveaux relié aux première et deuxième extrémités des première et deuxième branches.

De préférence, l'onduleur de tension réversible à trois niveaux est relié en outre au nœud commun entre les deux condensateurs de filtrage.

Selon un deuxième mode de réalisation, le dispositif de conversion d'énergie électrique réversible comprend un premier et un deuxième onduleurs de tension réversible à deux niveaux identiques, le premier onduleur étant relié d'une part, à la première extrémité des première et deuxième branches et, d'autre part, au nœud commun entre les deux condensateurs de filtrage et le deuxième onduleur étant relié d'une part, à la première extrémité des première et deuxième branches et, d'autre part, au nœud commun entre les deux condensateurs de filtrage, chaque onduleur étant destiné à être relié à une source d'énergie électrique différente.

Avantageusement, le moyen de stockage d'énergie électrique comprend une batterie ou une supercapacité et des moyens de surveillance aptes à mesurer les caractéristiques électriques et thermiques de chaque moyen de stockage d'énergie et transmettre les valeurs mesurées à des moyens de commande.

Il est proposé selon un autre aspect, un système de stockage d'énergie électrique comprenant au moins un module de stockage d'énergie tel que défini précédemment et des moyens de commande aptes à piloter le module de stockage d'énergie, dans lequel le dispositif de stockage et le convertisseur de puissance sont reliés par au moins deux branchements.

Selon un mode de réalisation, le système de stockage d'énergie électrique comprend en outre un transformateur comprenant un circuit primaire destiné à être relié à une source de tension réversible et un circuit secondaire configuré en étoile relié au dispositif de conversion d'énergie, le point neutre du circuit secondaire étant relié au nœud commun entre les deux moyens de stockage d'énergie électrique.

Selon un autre mode de réalisation, le dispositif de stockage et le convertisseur de puissance sont reliés par trois branchements, les modules de stockage étant reliés en série, chaque onduleur étant destiné à être relié à une source de tension réversible indépendante.

Selon encore un autre mode de réalisation, le dispositif de stockage et le convertisseur de puissance sont reliés par trois branchements et comprenant un transformateur comprenant un circuit primaire destiné à être relié à une source de tension réversible et autant de circuits secondaires que d'onduleur, chaque onduleur étant relié à un circuit secondaire différent.

Il est proposé selon encore un autre aspect, un procédé de stockage d'énergie électrique comprenant une étape d'équilibrage de tensions entre au moins deux moyens de stockage reliés chacun à un circuit secondaire d'un transformateur.

On équilibre les tensions par l'intermédiaire dudit circuit secondaire.

Selon un mode de mise en œuvre, le procédé comprend comprenant en outre une étape de consignation comprenant une première phase durant laquelle on ouvre un interrupteur de déconnexion de chacun des modules de stockage de manière à déconnecter les modules l'un de l'autre, puis une seconde phase durant laquelle on ferme un interrupteur de mise à la terre de chacun des modules de stockage.

Selon un mode de mise en œuvre, si un module de stockage d'énergie électrique est défaillant, on ouvre l'interrupteur de shunt du module de stockage d'énergie électrique défaillant puis on ferme un interrupteur de shunt du module de stockage d'énergie électrique de manière à isoler ledit module défaillant des autres modules.

D'autres caractéristiques et avantages de l'invention apparaîtront à la lecture de la description qui suit de modes de réalisation de l'invention, donnés uniquement à titre d'exemples non limitatifs et en référence aux dessins sur lesquels :
- la figure 1 illustre un mode de réalisation d'un système de stockage d'énergie électrique à batteries selon l'état de la techniques ;
- la figure 2 illustre un premier mode de réalisation d'un système de stockage d'énergie électrique ;
- la figure 3 illustre un premier mode de réalisation d'un module de stockage d'énergie électrique ;
- la figure 4 illustre un mode de réalisation d'un dispositif de stockage d'énergie électrique ;
- la figure 5 illustre un deuxième mode de réalisation d'un premier module de stockage d'énergie électrique ;
- la figure 6 illustre un deuxième mode de réalisation d'un système de stockage d'énergie électrique ;
- la figure 7 illustre un troisième mode de réalisation d'un système de stockage d'énergie électrique ;
- la figure 8 illustre un mode de réalisation d'un deuxième module de stockage d'énergie électrique ;
- la figure 9 illustre un troisième mode de réalisation d'un système de stockage d'énergie électrique ;
- la figure 10 illustre un quatrième mode de réalisation d'un système de stockage d'énergie électrique ; et
- la figure 11 illustre un mode de mise en œuvre du système de stockage d'énergie électrique.

On se réfère à la figure 2 qui illustre un mode premier de réalisation d'un système de stockage d'énergie électrique 10 relié d'une part à une première source de tension G1 électrique triphasée réversible et, d'autre part, à une masse GND.

La première source de tension G1 est par exemple un réseau électrique comprenant une éolienne et une charge électrique.

Le système de stockage 10 comprend un module de stockage d'énergie électrique 11 comprenant une première borne 12 reliée à la source de tension Gl, une deuxième borne 13 reliée à la masse GND, une troisième borne 14, une première borne 15 d'interconnexion et une deuxième borne 16 d'interconnexion aptes à raccorder des modules entre eux en série.

Le système de stockage 10 comprend en outre des moyens MC de commande aptes à piloter le module de stockage d'énergie électrique 11.

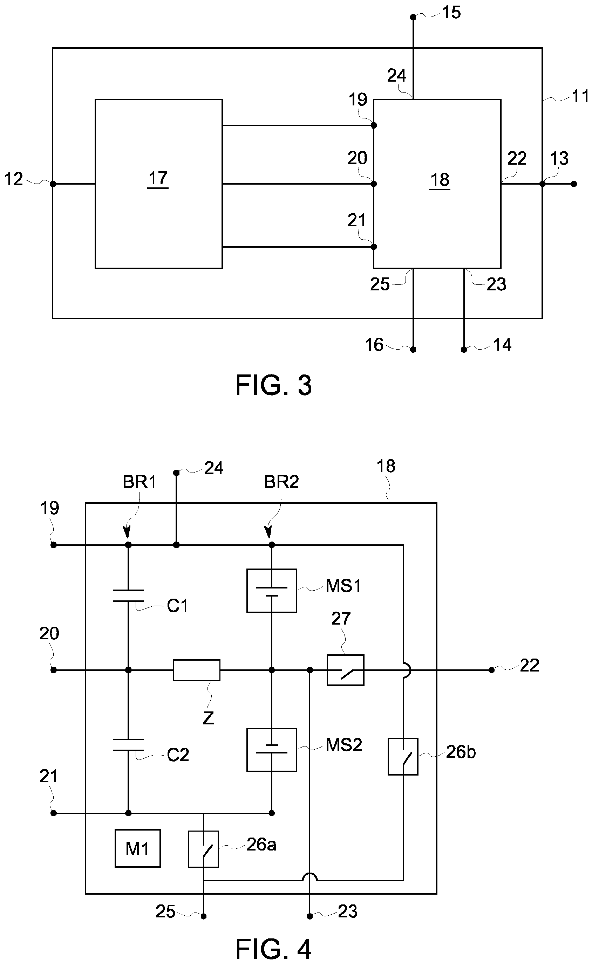

La figure 3 illustre un premier mode de réalisation du module de stockage d'énergie électrique 11.

Ce module comprend un dispositif de conversion d'énergie électrique réversible comprenant un onduleur de tension 17 réversible à trois niveaux commandé par les moyens de commande MC selon par exemple une commande du type à modulation de largeur d'impulsion (MLI) et un dispositif 18 de stockage d'énergie électrique.

Le dispositif 18 de stockage d'énergie électrique comprend ici trois bornes d'entrée 19, 20 et 21 reliées à des sorties différentes de l'onduleur de tension 17, une quatrième borne 22 reliée à la deuxième borne 13 du module de stockage 11, une borne 23 de sortie reliée à la troisième borne 14 du module de stockage 11, une cinquième borne 24 reliée à la première borne 15 d'interconnexion et une sixième borne 25 reliée à la deuxième borne 16 interconnexion.

L'onduleur de tension 17 est relié en outre à la première borne 12 du module de stockage 11 et est piloté par les moyens MC de commande.

On se réfère à la figure 4 qui illustre un mode de réalisation du dispositif 18 de stockage d'énergie électrique.

Le dispositif 18 de stockage d'énergie électrique comprend une première branche BR1 comprenant deux condensateurs C1 et C2 de filtrage identiques reliés en série et une deuxième branche BR2 comprenant deux moyens de stockage MS1 et MS2 d'énergie électrique identiques reliés en série.

Le nœud commun aux deux condensateurs C1 et C2 et le nœud commun entre les deux moyens de stockage MS1 et MS2 sont reliés par une impédance Z.

Une première extrémité des première et deuxième branches BR1 et BR2 est reliée à la première borne 19 d'entrée du dispositif 18, une deuxième extrémité des première BR1 et deuxième BR2 branches de stockage d'énergie électrique est reliée à la troisième borne 21 d'entrée et le nœud commun aux deux condensateurs C1 et C2 est relié à la deuxième borne 20 d'entrée.

Le nœud commun aux deux moyens de stockage MS1 et MS2 est relié à la borne 23 de sortie du dispositif 16 de stockage.

La première extrémité des première et deuxième branches BR1 et BR2 est reliée en outre à la cinquième borne 24 du dispositif 18 et la deuxième extrémité des première BR1 et deuxième BR2 branches de stockage d'énergie électrique est reliée à la sixième borne 25 du dispositif 18.

Le dispositif 18 de stockage d'énergie électrique comprend en outre un interrupteur 26a de déconnexion relié entre la deuxième extrémité des première BR1 et deuxième BR2 branches et la sixième borne 25 du dispositif 18, un interrupteur 26b de shunt relié d'une part entre l'interrupteur 26a de déconnexion et la sixième borne 25 et, d'autre part, à la première extrémité des première BR1 et deuxième BR2 branches, et un interrupteur 27 de mise à la masse relié entre le nœud commun aux deux moyens de stockage MS1 et MS2 et la quatrième borne 22 du dispositif 16.

Les interrupteurs comprennent par exemple chacun un dispositif de sectionnement à couteaux et/ou un dispositif à base de semiconducteur contrôlé.

Le dispositif 18 comprend en outre des moyens Ml de surveillance aptes à mesurer les caractéristiques électriques et thermiques des moyens de stockage MS1 et MS2, notamment la tension aux bornes des moyens de stockage MS1 et MS2 et la température des moyens de stockage.

Les moyens de commande MC sont en outre aptes à piloter les interrupteurs de déconnexion 26a et de shunt 26b et l'interrupteur 27 de mise à la masse et en outre sont aptes à traiter les valeurs mesurées par les moyens Ml de surveillance.

Les moyens de stockage MS1 et MS2 peuvent comprendre chacun par exemple une batterie ou une supercapacité, la tension aux bornes des moyens de stockage étant égale ou inférieure à 1500 volts continu de sorte que chaque moyen de stockage soit régi par les règlements relatifs aux dispositifs d stockage de basse tension.

L'impédance Z est dimensionnée de manière à stabiliser le courant notamment lors des phases de commutation du dispositif de conversion d'énergie 17.

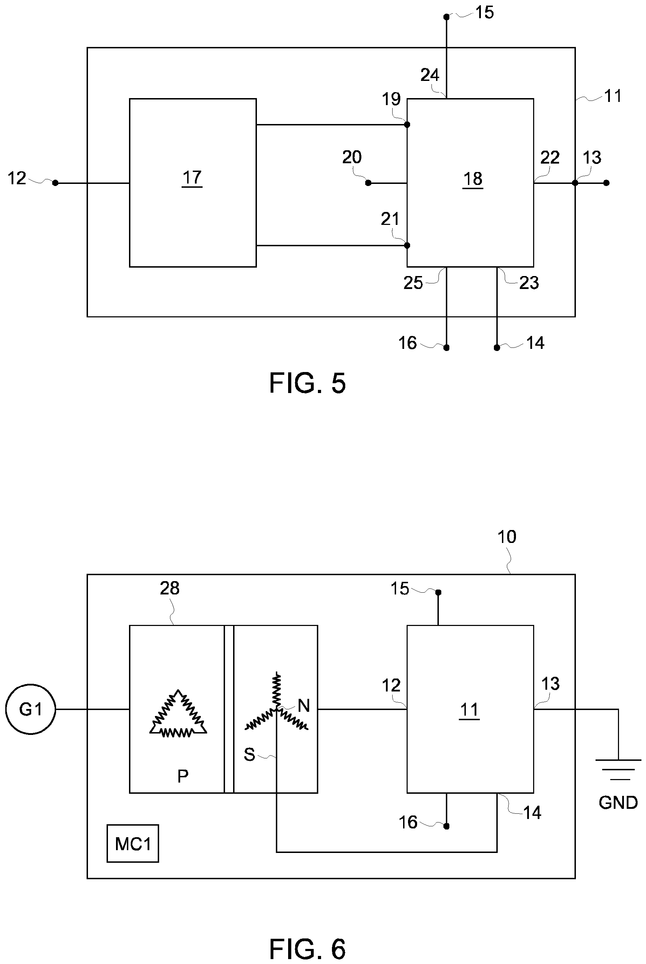

La figure 5 illustre un deuxième mode de réalisation du module de stockage d'énergie électrique 11.

Les éléments identiques à ceux décrits précédemment sont identifiés par les mêmes références numériques.

On retrouve l'onduleur de tension 17 réversible à trois niveaux relié au dispositif 18 de stockage d'énergie électrique.

La deuxième borne 20 d'entrée du dispositif 18 de stockage n'est toutefois pas reliée à l'onduleur 17.

On se réfère à la figure 6 qui illustre un deuxième mode de réalisation d'un système de stockage d'énergie électrique 10 relié à la première source de tension G1 électrique triphasée réversible et à la une masse GND.

Les éléments identiques à ceux décrits précédemment sont identifiés par les mêmes références numériques.

Le système de stockage 10 comprend le module de stockage d'énergie électrique 11 selon le deuxième mode de réalisation de la figure 5 et un transformateur 28 comprenant un circuit primaire P en configuration triangle et un circuit secondaire S en configuration étoile.

Le circuit primaire P est relié à la source G1 et le circuit secondaire S est relié à la première borne 12 du module de stockage 11.

Le système de stockage 10 comprend en outre des moyens MC1 de commande aptes à piloter le module de stockage 11, piloter les interrupteurs de déconnexion 26a et de shunt 26b et l'interrupteur 27 de mise à la masse et aptes en outre à traiter les valeurs mesurées par les moyens Ml de surveillance.

Un point neutre N du circuit secondaire S est relié à la troisième borne 14 du module 11 de manière à équilibrer la tension continue aux bornes des moyens de stockage MS1 et MS2.

En cas de déséquilibre entre les tensions continues des moyens de stockage MS1 et MS2 provoqué par exemple par la source G1 générant des harmoniques de courant de rang deux, les moyens de commande MC1 appliquent un potentiel au point neutre N du circuit secondaire S du transformateur de manière à générer un courant circulant à partir du moyen de stockage ayant la plus haute tension continue. Le courant généré décharge ledit moyen de stockage de manière à diminuer la tension à ses bornes et à équilibrer les tensions aux bornes des moyens MS1 et MS2 de sorte que la valeur de la tension aux bornes des moyens MS1 et MS2 soit égale.

Dans le mode de réalisation décrit à la figure 3, un déséquilibre entre les tensions continues des moyens de stockage MS1 et MS2 est résorbé partiellement par l'injection par l'onduleur d'une harmonique de rang trois sur chaque phase selon le principe de la surmodulation.

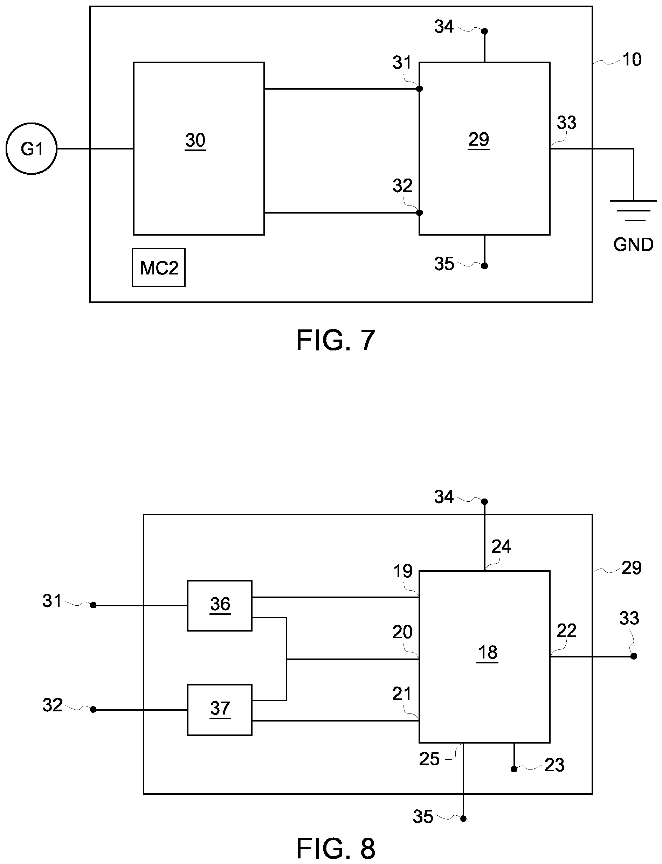

On se réfère à la figure 7 qui illustre un troisième mode de réalisation d'un système de stockage d'énergie électrique 10 relié à la première source de tension G1 électrique triphasée réversible et à la une masse GND.

Le système de stockage 10 comprend un module de stockage d'énergie électrique 29 et un transformateur 30 comprenant un circuit primaire, par exemple en configuration triangle, relié à la source G1 et deux circuits secondaires de configuration identique, par exemple en configuration étoile, reliés chacun à une entrée 31 et 32 différente du module de stockage 29.

Le module de stockage 29 comprend une borne 33 reliée à la masse GND et deux bornes 34 et 35 d'interconnexion.

Le système de stockage 10 comprend en outre des moyens de commande MC2 aptes à piloter le module de stockage 29, piloter les interrupteurs de déconnexion 26a et de shunt 26b et l'interrupteur 27 de mise à la masse et aptes en outre à traiter les valeurs mesurées par les moyens Ml de surveillance.

On se réfère à présent à la figure 8 qui illustre un mode de réalisation du module de stockage d'énergie électrique 29.

Le module de stockage d'énergie électrique 29 comprend un premier et un deuxième onduleurs 36 et 37 réversibles identiques, à deux niveaux de tension et le dispositif 18 de stockage d'énergie électrique.

Le premier onduleur 36 est relié à l'entrée 31 et le deuxième onduleur 37 est relié à l'entrée 32 du module de stockage.

Une première et une deuxième sorties du premier onduleur 36 sont reliées respectivement à la première borne 19 et la deuxième borne 20 d'entrée du dispositif 18 de stockage d'énergie électrique.

Une première et une deuxième sorties du premier onduleur 37 sont reliées respectivement à la deuxième borne 20 et à la troisième borne 21 d'entrée du dispositif 18 de stockage d'énergie électrique.

La quatrième borne 22 du dispositif 18 de stockage est reliée à borne 33 du module de stockage d'énergie électrique 29.

La borne 23 de sortie du dispositif 18 de stockage n'est pas utilisée.

Les cinquième 24 et sixième 25 bornes du dispositif 18 de stockage sont reliées respectivement aux première et deuxième bornes 34 et 35 d'interconnexion.

En cas de déséquilibre entre les tensions continues des moyens de stockage MS1 et MS2, les moyens MC1 de commande pilotent les premier et deuxième onduleurs 36 et 37 de sorte que le moyen de stockage présentant une tension continue la plus élevée à ses bornes se décharge et charge le deuxième moyen de stockage à travers les deux circuits secondaires du transformateur 30 jusqu'à ce que la valeur des tensions aux bornes de moyens MS1 et MS2 soit égale.

Dans les différents modes de réalisation du système de stockage d'énergie électrique décrits précédemment, un seul dispositif 18 de stockage d'énergie électrique est incorporé dans le système de stockage.

Par conséquent le système de stockage stocke de l'énergie électrique sous une tension continue maximale de deux fois 1500 volts continu soit 3000 volts continu.

La tension aux bornes de chaque moyen de stockage étant inférieure à 1500 volts continu, le règlement « basse tension » s'applique.

Lorsque le système de stockage stocke de l'énergie électrique sous une tension continue supérieure 3000 volts, il est nécessaire de raccorder plusieurs modules de stockage d'énergie électrique de sorte que la valeur de la tension aux bornes de l'ensemble des dispositifs de stockage d'énergie électrique soit égale à la valeur de la tension imposée par exemple par un cahier des charges.

Les modules de stockage sont raccordés entre eux par l'intermédiaire des bornes d'interconnexion 15 et 16.

A présent sont décrits des modes de réalisation d'un système de stockage d'énergie électrique 10 comprenant deux modules.

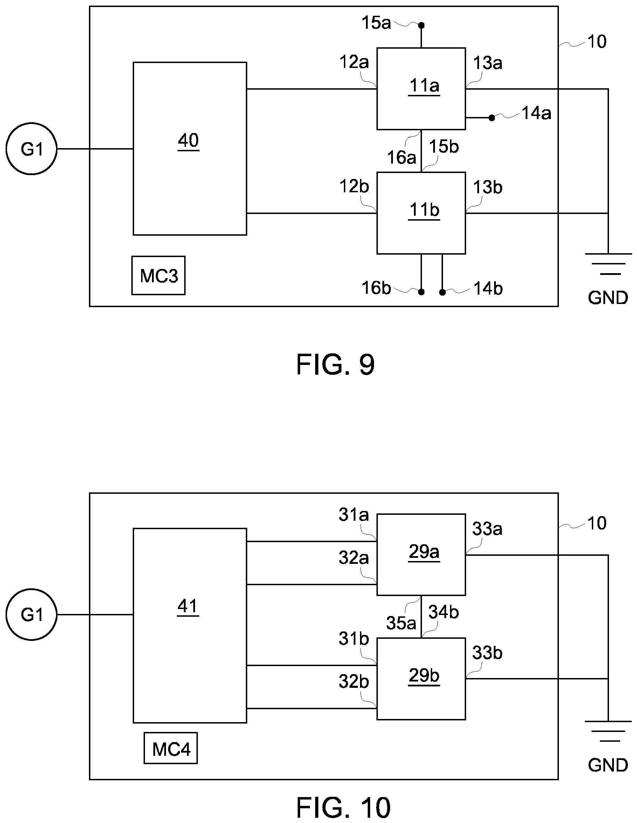

On se réfère à la figure 9 qui illustre un troisième mode de réalisation d'un système de stockage d'énergie électrique 10 relié à la première source de tension G1 électrique triphasée réversible et à la masse GND.

Le système de stockage 10 comprend un premier et un deuxième modules de stockage 11a et 11b identiques au premier mode de réalisation de la figure 3 et un transformateur 40 comprenant un circuit primaire, par exemple configuré en triangle, relié à la source G1 et deux circuits secondaires identiques par exemple configurés en étoile.

Un premier circuit secondaire du transformateur 40 est relié à une première borne 12a du premier module de stockage 11a et un deuxième circuit secondaire du transformateur 40 est relié à une première borne 12b du deuxième module de stockage 11b.

Une deuxième borne 13a et 13b des modules de stockage 11a et 11b est reliée à la masse GND.

Une première borne 15b d'interconnexion du deuxième module de stockage 11b est reliée à la deuxième borne 16a du premier module de stockage 11a.

Les moyens de stockage incorporés dans les premier et deuxième modules 11a et 11b sont reliés en série.

Le système de stockage 10 comprend en outre des moyens MC3 de commande aptes à piloter les premier et deuxième modules 11a et 11b.

Chaque module de stockage 11a et 11b comporte une troisième borne 14a et 14b non reliée dans ce mode de réalisation.

En cas de déséquilibre des tensions entre les différents moyens de stockage, l'équilibrage des tensions s'effectue par un transfert d'énergie électrique piloté par les moyens MC3 de commande entre les moyens de stockage par l'intermédiaire des circuits secondaires du transformateur, comme décrit précédemment dans le mode de réalisation illustré à la figure 8.

Le système de stockage 10 décrit à la figure 10 comprend un premier et un deuxième modules de stockage 29a et 29b identiques au mode de réalisation de la figure 8 et un transformateur 41 comprenant un circuit primaire, par exemple configuré en triangle, relié à la source G1 et quatre circuits secondaires identiques par exemple configurés en étoile.

Un premier et un deuxième circuits secondaires du transformateur 41 sont reliés respectivement à une première et deuxième entrées 31a et 32a différentes du premier module de stockage 29a.

Un troisième et un quatrième circuits secondaires du transformateur 41 sont reliés respectivement à une première et deuxième entrées 31b et 32b différentes du deuxième module de stockage 29b.

Une borne 33a et 33b des premier et deuxième modules de stockage 29a et 29b est reliée à la masse GND.

Une première borne 34b d'interconnexion du deuxième module de stockage 29b est reliée à une deuxième borne 35a d'interconnexion du premier module de stockage 29a.

Le système de stockage 10 comprend en outre des moyens MC4 de commande aptes à piloter les premier et deuxième modules de stockage d'énergie électrique 29a et 29b.

En cas de déséquilibre des tensions entre les différents moyens de stockage, l'équilibrage des tensions s'effectue par un transfert d'énergie électrique piloté par les moyens MC4 de commande entre les moyens de stockage par l'intermédiaire des circuits secondaires du transformateur comme décrit précédemment en référence à la figure 8.

Bien que les modes de réalisation illustrés par les figures 9 et 10 ne comprennent que deux modules de stockage d'énergie électrique, selon la quantité d'énergie à stocker, un système de stockage d'énergie électrique peut comprendre plus que deux modules de stockage reliés entre eux comme décrit précédemment.

Dans ce cas, le transformateur comprend autant de circuits secondaires que d'onduleurs de tension, chaque onduleur étant relié à un circuit secondaire différent.

Dans les divers modes de réalisation du système de stockage 10, le transformateur réalise une fonction d'isolation galvanique entre les modules de stockage d'énergie électrique.

Le système 10 de stockage d'énergie électrique décrit précédemment est raccordé à une unique source G1.

Il peut toutefois être raccordé à plusieurs sources de tension réversible indépendantes.

Dans ce cas, chaque source est reliée directement à un onduleur différent incorporé dans le système. Il n'y a plus de transformateur d'isolation galvanique.

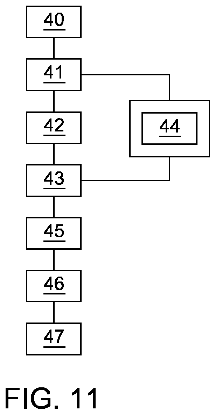

On se réfère à la figure 11 qui décrit un mode de mise en œuvre du système 10 de stockage d'énergie électrique.

On suppose qu'initialement le système 10 de stockage est consigné et les moyens de stockage sont déchargés. Les interrupteurs de déconnexion 26a et de shunt 26b et l'interrupteur 27 de mise à la masse sont ouverts.

La source G1 génère de l'énergie électrique.

Dans une première étape 40 d'initialisation, les moyens de commande pilotent l'interrupteur 26a de déconnexion de chacun des modules de stockage de manière qu'il soit fermé.

Lors d'une étape 41 de charge suivante, les moyens de commande pilotent le ou les onduleurs de tension du système de stockage de manière à charger les moyens de stockage d'énergie électrique.

Les moyens de surveillance de chaque module de stockage relèvent notamment la tension aux bornes de chaque moyen de stockage et la température de chaque moyen de stockage.

Lorsque les moyens de stockage sont chargés, c'est-à-dire lorsque la tension aux bornes de chaque moyen de stockage est égale à une valeur prédéterminée inférieur à 1500 vols continu, au cours d'une étape 42 d'attente, les moyens de commande pilotent les onduleurs de manière à ce qu'ils ne laissent passer aucun courant.

Lorsque la source G1 demande de l'énergie électrique, dans une étape 43 de décharge, les moyens de commande pilotent les onduleurs de manière à décharger les moyens de stockage à la tension et à la fréquence demandées par la source G1.

Pendant les étapes de charge 41 et de décharge 43, dans une sous-étape 44 de consignation, les moyens de commande équilibrent la tension aux bornes de chacun des moyens de stockage de sorte que la tension aux bornes de chacun des moyens de stockage soit identique.

Pendant les étapes d'initialisation, de charge, de décharge et d'attente, les moyens de surveillance transmettent les valeurs mesurées aux moyens de commande.

Si les moyens de commande identifient un moyen de stockage défaillant, par exemple un moyen de stockage en surchauffe, pendant une étape 45, les moyens de commande ouvrent, lors d'une première phase, l'interrupteur 26a de déconnexion du module de stockage d'énergie électrique comprenant le moyen de stockage défaillant puis, lors d'une deuxième phase, ferment l'interrupteur 26b de shunt du module de stockage d'énergie électrique comprenant le moyen de stockage défaillant.

Le module de stockage défaillant est isolé, par conséquent le système de stockage est toujours opérationnel.

Avantageusement, le système de stockage fonctionne quand bien même un ou plusieurs modules de stockage sont défaillants.

Lorsque le système 10 de stockage n'est pas fonctionnel, par exemple lors d'une opération de maintenance, pendant une étape 46 de consignation, les moyens de commande ouvrent lors d'une première phase l'interrupteur 26a de déconnexion de chacun des modules de stockage puis, lors d'une seconde phase, les moyens de commande ferment l'interrupteur 27 de mise à la terre de chacun des modules de stockage (étape 47).

Avantageusement, la tension aux bornes de chacun des moyens de stockage est inférieure à 1500 volts continu.

## Revendications

1. Module de stockage d'énergie électrique comprenant un dispositif de conversion d'énergie électrique réversible (17, 36, 37) destiné à être relié à une source (G1) d'énergie électrique et un dispositif de stockage d'énergie électrique (18), le dispositif de stockage comprenant une première branche (BR1) comprenant deux condensateurs (C1, C2) de filtrage en série et une deuxième branche (BR2) comprenant deux moyens (MS1, MS2) de stockage d'énergie électrique identiques, le nœud commun aux deux condensateurs et le nœud commun aux deux moyens de stockage d'énergie étant reliés par une impédance (Z), une première extrémité des première et deuxième branches étant reliées au dispositif de conversion d'énergie électrique, une deuxième extrémité des première et deuxième branches étant reliées au dispositif de conversion d'énergie électrique, **caractérisé en ce que** le dispositif de stockage (18) comprend en outre une borne (24) reliée à la première extrémité des première et deuxième branches, un interrupteur (26a) de déconnexion relié entre la deuxième extrémité desdites branches et une borne de sortie (25), un interrupteur (26b) de shunt relié d'une part entre l'interrupteur de déconnexion et la borne de sortie (25) et, d'autre part, à la première extrémité desdites branches de manière à shunter les moyens (MS1, MS2) de stockage d'énergie électrique et un interrupteur (27) de mise à la masse relié entre le nœud commun aux deux moyens de stockage et une masse.

2. Module de stockage d'énergie électrique selon la revendication 1, dans lequel le dispositif de conversion d'énergie électrique réversible (17) comprend un onduleur de tension réversible à trois niveaux relié aux première et deuxième extrémités des première et deuxième branches (BR1, BR2).

3. Module de stockage d'énergie électrique selon la revendication 2, dans lequel l'onduleur de tension réversible à trois niveaux est relié en outre au nœud commun entre les deux condensateurs (Cl, C2) de filtrage.

4. Module de stockage d'énergie électrique selon la revendication 1, dans lequel le dispositif de conversion d'énergie électrique réversible (17) comprend un premier et un deuxième onduleurs de tension réversible (36, 37) à deux niveaux identiques, le premier onduleur (36) étant relié d'une part, à la première extrémité des première et deuxième branches et, d'autre part, au nœud commun entre les deux condensateurs (Cl, C2) de filtrage et le deuxième onduleur (37) étant relié d'une part, à la première extrémité des première et deuxième branches et, d'autre part, au nœud commun entre les deux condensateurs de filtrage, chaque onduleur étant destiné à être relié à une source d'énergie électrique différente.

5. Module de stockage d'énergie électrique selon l'une quelconques des revendications 1 à 3, dans lequel le moyen (MS1, MS2) de stockage d'énergie électrique comprend une batterie ou une supercapacité et des moyens (M1) de surveillance aptes à mesurer les caractéristiques électriques et thermiques de chaque moyen de stockage d'énergie et transmettre les valeurs mesurées à des moyens de commande.

6. Système de stockage d'énergie électrique comprenant au moins un module (11) de stockage d'énergie selon l'une quelconques des revendications 1 à 5 et des moyens (MC, MC1, MC2, MC3, MC4) de commande aptes à piloter le module de stockage d'énergie, dans lequel le dispositif (18) de stockage et le convertisseur (17) de puissance sont reliés par au moins deux branchements.

7. Système de stockage d'énergie électrique selon la revendication 6, comprenant en outre un transformateur (28) comprenant un circuit primaire (P) destiné à être relié à une source de tension réversible et un circuit secondaire (S) configuré en étoile relié au dispositif de conversion d'énergie, le point neutre (N) du circuit secondaire étant relié au nœud commun entre les deux moyens (MS1, MS2) de stockage d'énergie électrique.

8. Système de stockage d'énergie électrique selon la revendication 6, dans lequel le dispositif (18) de stockage et le convertisseur (17) de puissance sont reliés par trois branchements, les modules de stockage étant reliés en série, chaque onduleur étant destiné à être relié à une source de tension réversible indépendante.

9. Système de stockage d'énergie électrique selon la revendication 6, dans lequel le dispositif (18) de stockage et le convertisseur (17) de puissance sont reliés par trois branchements et comprenant un transformateur (30, 40, 41) comprenant un circuit primaire destiné à être relié à une source de tension réversible et autant de circuits secondaires que d'onduleur, chaque onduleur étant relié à un circuit secondaire différent.

10. Procédé de stockage d'énergie électrique comprenant une étape d'équilibrage (44) de tensions entre au moins deux moyens de stockage d'au moins un module de stockage d'énergie comprenant un dispositif de conversion d'énergie électrique réversible (17, 36, 37) relié à une source (G1) d'énergie électrique et un dispositif de stockage d'énergie électrique (18) comprenant une première branche (BR1) comprenant deux condensateurs (Cl, C2) de filtrage en série et une deuxième branche (BR2) comprenant les deux moyens (MS1, MS2) de stockage d'énergie électrique identiques, le nœud commun aux deux condensateurs et le nœud commun aux deux moyens de stockage d'énergie étant reliés au dispositif de conversion d'énergie électrique par l'intermédiaire d'une impédance (Z), une première extrémité des première et deuxième branches étant reliées au dispositif de conversion d'énergie électrique, chaque moyens de stockage étant relié à un circuit secondaire d'un transformateur par l'intermédiaire du dispositif de conversion d'énergie électrique, dans lequel on équilibre les tensions par l'intermédiaire dudit circuit secondaire, **caractérisé en ce que** le procédé comprend en outre une étape de consignation (46) comprenant une première phase durant laquelle on ouvre un interrupteur (26b) de déconnexion de chacun des modules de stockage de manière à déconnecter les modules l'un de l'autre, puis une seconde phase durant laquelle on ferme un interrupteur (27) de mise à la terre de chacun des modules de stockage.

11. Procédé selon la revendication 10, dans lequel, si un module de stockage d'énergie électrique est défaillant, on ouvre l'interrupteur (26a) de déconnexion du module de stockage d'énergie électrique défaillant puis on ferme un interrupteur (26b) de shunt du module de stockage d'énergie électrique de manière à isoler ledit module défaillant des autres modules.

## Patentansprüche

1. Modul zum Speichern von elektrischer Energie, das eine reversible Vorrichtung zum Umwandeln von elektrischer Energie (17, 36, 37), die dazu bestimmt ist, an eine Quelle (G1) elektrischer Energie angeschlossen zu werden, und eine Vorrichtung zum Speichern von elektrischer Energie (18) umfasst, wobei die Speichervorrichtung einen ersten Zweig (BR1), der zwei Filterkondensatoren (Cl, C2) in Reihenschaltung umfasst, und einen zweiten Zweig (BR2) umfasst, der zwei identische Mittel (MS1, MS2) zum Speichern von elektrischer Energie umfasst, wobei der den zwei Kondensatoren gemeinsame Knoten und der den zwei Energiespeichermitteln gemeinsame Knoten durch eine Impedanz (Z) angeschlossen sind, wobei ein erstes Ende des ersten und des zweiten Zweiges an die Vorrichtung zum Umwandeln von elektrischer Energie angeschlossen ist, wobei ein zweites Ende des ersten und des zweiten Zweiges an die Vorrichtung zum Umwandeln von elektrischer Energie angeschlossen ist, **dadurch gekennzeichnet, dass** die Speichervorrichtung (18) weiter eine Klemme (24), die an das erste Ende des ersten und des zweiten Zweiges angeschlossen ist, einen Trennschalter (26a), der zwischen dem zweiten Ende der Zweige und einer Ausgangsklemme (25) angeschlossen ist, einen Nebenschlussschalter (26b), der einerseits zwischen dem Trennschalter und der Ausgangsklemme (25), und andererseits an das erste Ende der Zweige angeschlossen ist, um einen Nebenschluss der Mittel (MS1, MS2) zum Speichern von elektrischer Energie herzustellen, und einem Masseschalter (27) umfasst, der zwischen dem den zwei Speichermitteln gemeinsamen Knoten und einer Masse angeschlossen ist.

2. Modul zum Speichern von elektrischer Energie nach Anspruch 1, wobei die reversible Vorrichtung zum Umwandeln von elektrischer Energie (17) einen reversiblen Dreistufen-Spannungswechselrichter umfasst, der an das erste und das zweite Ende des ersten und des zweiten Zweiges (BR1, BR2) angeschlossen ist.

3. Modul zum Speichern von elektrischer Energie nach Anspruch 2, wobei der reversible Dreistufen-Spannungswechselrichter weiter an den gemeinsamen Knoten zwischen den zwei Filterkondensatoren (Cl, C2) angeschlossen ist.

4. Modul zum Speichern von elektrischer Energie nach Anspruch 1, wobei die reversible Vorrichtung zum Umwandeln von elektrischer Energie (17) einen ersten und einen zweiten identischen reversiblen Zweistufen-Spannungswechselrichter (36, 37) umfasst, wobei der erste Wechselrichter (36) einerseits an das erste Ende des ersten und des zweiten Zweiges, und andererseits an den gemeinsamen Knoten zwischen den zwei Filterkondensatoren (Cl, C2) angeschlossen ist, und der zweite Wechselrichter (37) einerseits an das erste Ende des ersten und des zweiten Zweiges, und andererseits an den gemeinsamen Knoten zwischen den zwei Filterkondensatoren angeschlossen ist, wobei jeder Wechselrichter dazu bestimmt ist, an eine andere Quelle elektrischer Energie angeschlossen zu werden.

5. Modul zum Speichern von elektrischer Energie nach einem der Ansprüche 1 bis 3, wobei das Mittel (MS1, MS2) zum Speichern von elektrischer Energie eine Batterie oder eine Superkapazität und Überwachungsmittel (M1) umfasst, die in der Lage sind, die elektrischen und thermischen Merkmale jedes Energiespeichermittels zu messen und die gemessenen Werte an Steuermittel zu übertragen.

6. System zum Speichern von elektrischer Energie, das mindestens ein Energiespeichermodul (11) nach einem der Ansprüche 1 bis 5 und Steuermittel (MC, MC1, MC2, MC3, MC4) umfasst, die in der Lage sind, das Energiespeichermodul anzusteuern, wobei die Speichervorrichtung (18) und der Leistungswandler (17) über mindestens zwei Abzweigungen angeschlossen sind.

7. System zum Speichern von elektrischer Energie nach Anspruch 6, das weiter einen Transformator (28) umfasst, der einen primären Schaltkreis (P), der dazu bestimmt ist, an eine reversible Spannungsquelle angeschlossen zu werden, und einen sekundären Schaltkreis (S) in Sternkonfiguration umfasst, der an die Energieumwandlungsvorrichtung angeschlossen ist, wobei der Neutralpunkt (N) des sekundären Schaltkreises an den gemeinsamen Knoten zwischen den zwei Mitteln (MS1, MS2) zum Speichern von elektrischer Energie angeschlossen ist.

8. System zum Speichern von elektrischer Energie nach Anspruch 6, wobei die Speichervorrichtung (18) und der Leistungswandler (17) über drei Abzweigungen angeschlossen sind, wobei die Speichermodule in Reihe geschaltet sind, wobei jeder Wechselrichter dazu bestimmt ist, an eine unabhängige reversible Spannungsquelle angeschlossen zu werden.

9. System zum Speichern von elektrischer Energie nach Anspruch 6, wobei die Speichervorrichtung (18) und der Leistungswandler (17) über drei Abzweigungen angeschlossen sind, und einen Transformator (30, 40, 41) umfassend, der einen primären Schaltkreis, der dazu bestimmt ist, an eine reversible Spannungsquelle angeschlossen zu werden, und ebenso viele sekundäre Schaltkreise wie Wechselrichter umfasst, wobei jeder Wechselrichter an einen anderen sekundären Schaltkreis angeschlossen ist.

10. Verfahren zum Speichern von elektrischer Energie, das einen Schritt des Ausgleichens (44) von Spannungen zwischen mindestens zwei Speichermitteln mindestens eines Energiespeichermoduls umfasst, das eine reversible Vorrichtung zum Umwandeln von elektrischer Energie (17, 36, 37), die an eine Quelle (G1) elektrischer Energie angeschlossen ist, und eine Vorrichtung zum Speichern von elektrischer Energie (18) umfasst, die einen ersten Zweig (BR1), der zwei Filterkondensatoren (Cl, C2) in Reihenschaltung umfasst, und einen zweiten Zweig (BR2) umfasst, der die zwei identischen Mittel (MS1, MS2) zum Speichern von elektrischer Energie umfasst, wobei der den zwei Kondensatoren gemeinsame Knoten und der den zwei Energiespeichermitteln gemeinsame Knoten mittels einer Impedanz (Z) an die Vorrichtung zum Umwandeln von elektrischer Energie angeschlossen sind, wobei ein erstes Ende des ersten und des zweiten Zweiges an die Vorrichtung zum Umwandeln von elektrischer Energie angeschlossen ist, wobei jedes Speichermittel mittels der Vorrichtung zum Umwandeln von elektrischer Energie an einen sekundären Schaltkreis eines Transformators angeschlossen ist, wobei die Spannungen mittels des sekundären Schaltkreises ausgeglichen werden, **dadurch gekennzeichnet, dass** das Verfahren weiter einen Schritt der Kommissionierung (46) umfasst, der eine erste Phase, bei der ein Trennschalter (26b) jedes der Speichermodule geöffnet wird, um die Module voneinander zu trennen, und anschließend eine zweite Phase umfasst, bei der ein Erdungsschalter (27) jedes der Speichermodule geschlossen wird.

11. Verfahren nach Anspruch 10, wobei, wenn ein Modul zur Speicherung von elektrischer Energie defekt ist, der Trennschalter (26a) des defekten Moduls zur Speicherung von elektrischer Energie geöffnet und anschließend ein Nebenschlussschalter (26b) des Moduls zur Speicherung von elektrischer Energie geschlossen wird, um das defekte Modul von den anderen Modulen zu trennen.

## Claims

1. An electrical energy storage module comprising a reversible electrical energy conversion device (17, 36, 37) intended to be connected to an electrical energy source (G1) and an electrical energy storage device (18), the storage device comprising a first branch (BR1) comprising two serial filtering capacitors (C1, C2) and a second branch (BR2) comprising two identical electrical energy storage means (MS1, MS2), the node common to the two capacitors and the node common to the two energy storage means being connected by an impedance (Z), a first end of the first and second branches being connected to the electrical energy conversion device, a second end of the first and second branches being connected to the reversible electrical energy conversion device, **characterised in that** the storage device (18) further comprises a terminal (24) connected to the first end of the first and second branches, a disconnection switch (26a) connected between the second end of said branches and an output terminal (25), a shunt switch (26b) connected, on the one hand, between the disconnection switch and the output terminal (25) and, on the other hand, to the first end of said branches so as to shunt the electrical energy storage means (MS1, MS2) and a grounding switch (27) connected between the node common to the two storage means and a ground.

2. The electrical energy storage module according to claim 1, wherein the reversible electrical energy conversion device (17) comprises a three-level reversible voltage inverter connected to the first and second ends of the first and second branches (BR1, BR2).

3. The electrical energy storage module according to claim 2, wherein the three-level reversible voltage inverter is further connected to the common node between the two filtering capacitors (C1, C2).

4. The electrical energy storage module according to claim 1, wherein the reversible electrical energy conversion device (17) comprises first and second reversible voltage inverters (36, 37) with two identical levels, the first inverter (36) being connected, on the one hand, to the first end of the first and second branches and, on the other hand, to the common node between the two filtering capacitors (C1, C2) and the second inverter (37) being connected, on the one hand, to the first end of the first and second branches and, on the other hand, to the common node between the two filtering capacitors, each inverter being intended to be connected to a different electrical energy source.

5. The electrical energy storage module according to any one of claims 1 to 3, wherein the electrical energy storage means (MS1, MS2) comprises a battery or a supercapacitor and monitoring means (M1) capable of measuring the electrical and thermal characteristics of each energy storage means and transmitting the measured values to control means.

6. An electrical energy storage system comprising at least one energy storage module (11) according to any one of claims 1 to 5 and control means (MC, MC1, MC2, MC3, MC4) capable of driving the energy storage module, wherein the storage device (18) and the power converter (17) are connected by at least two connections.

7. The electrical energy storage system according to claim 6, further comprising a transformer (28) comprising a primary circuit (P) intended to be connected to a reversible voltage source and a secondary circuit (S) configured as a star connected to the energy conversion device, the neutral point (N) of the secondary circuit being connected to the common node between the two electrical energy storage means (MS1, MS2).

8. The electrical energy storage system according to claim 6, wherein the storage device (18) and the power converter (17) are connected by three connections, the storage modules being connected in series, each inverter being intended to be connected to an independent reversible voltage source.

9. The electrical energy storage system according to claim 6, wherein the storage device (18) and the power converter (17) are connected by three connections and comprising a transformer (30, 40, 41) comprising a primary circuit intended to be connected to a reversible voltage source and as many secondary circuits as there are inverters, each inverter being connected to a different secondary circuit.

10. An electrical energy storage method comprising a step (44) of balancing voltages between at least two means for storing at least one energy storage module comprising a reversible electrical energy conversion device (17, 36, 37) connected to an electrical energy source (G1) and an electrical energy storage device (18) comprising a first branch (BR1) comprising two serial filtering capacitors (C1, C2) and a second branch (BR2) comprising the two identical electrical energy storage means (MS1, MS2), the node common to the two capacitors and the node common to the two energy storage means being connected to the electrical energy conversion device via an impedance (Z), a first end of the first and second branches being connected to the electrical energy conversion device, each storage means being connected to a secondary circuit of a transformer via the electrical energy conversion device, wherein the voltages are balanced via said secondary circuit, **characterised in that** the method further comprises a logging step (46) comprising a first phase during which a switch (26b) for disconnecting each of the storage modules is opened so as to disconnect the modules from each other, then a second phase during which a switch (27) for grounding each of the storage modules is closed.

11. The method according to claim 10, wherein, if an electrical energy storage module fails, the switch (26a) for disconnecting the faulty electrical energy storage module is opened then a switch (26b) for shunting the electrical energy storage module is closed so as to isolate said faulty module from the other modules.
